Europäisches Patentamt

European Patent Office

Office européen des brevets

(19)

(11) Veröffentlichungsnummer : **0 209 485**
**B1**

(12) **EUROPÄISCHE PATENTSCHRIFT**

(45) Veröffentlichungstag der Patentschrift :
17.08.88

(51) Int. Cl.⁴ : **F 16 B 13/06**

(21) Anmeldenummer : **86810248.4**

(22) Anmeldetag : **06.06.86**

(54) **Spreizanker.**

(30) Priorität : **15.07.85 DE 3525245**

(43) Veröffentlichungstag der Anmeldung :
**21.01.87 Patentblatt 87/04**

(45) Bekanntmachung des Hinweises auf die Patenterteilung : **17.08.88 Patentblatt 88/33**

(84) Benannte Vertragsstaaten :
**AT BE CH DE FR GB IT LI NL SE**

(56) Entgegenhaltungen :
**EP-A- 0 065 721**
**AT-B-   328 158**
**AT-B-   357 737**
**DE-A- 2 758 091**
**DE-A- 3 311 264**
**DE-A- 3 329 732**
**DE-A- 3 343 016**
**DE-A- 3 346 537**

(73) Patentinhaber : **HILTI Aktiengesellschaft**

**FL-9494 Schaan (LI)**

(72) Erfinder : **Kerrom, Roger**
**Hermann-Albrecht-Strasse 26**
**D-7850 Lörrach (DE)**

(74) Vertreter : **Wildi, Roland**
**Hilti Aktiengesellschaft Patentabteilung**
**FL-9490 Schaan (LI)**

**Beschreibung**

Die Erfindung betrifft einen Spreizanker zum Einsatz in eine Erweiterung aufweisenden Bohrlöchern, mit radial in die Erweiterung einrückbaren Ringsegmenten, einer dem Einrücken der Ringsegmente in die Erweiterung dienenden Spreizhülse und einer Ankerstange, die am setzrichtungsseitigen Ende ein Kopfteil zur axialen Abstützung der Ringsegmente aufweist.

Bei einem aus der DE-A1-27 58 091 bekannten Spreizanker werden zur Verankerung Ringsegmente mittels einer Spreizhülse radial ausgelenkt und dadurch in die Erweiterung eines Bohrloches eingerückt. Die Spreizhülse wird hierzu soweit in Setzrichtung verschoben, bis die Ringsegmente am radialen Grund der Erweiterung auflaufen. Das Ausmass der radialen Auslenkung der Ringsegmente sowie der Verschiebung der Spreizhülse ist demnach von der radialen Tiefe der Erweiterung abhängig.

Erhebliche Nachteile dieses Spreizankers sind die mangelnde Aufnahmefähigkeit für Querkräfte sowie der komplexe konstruktive Aufbau, indem beispielsweise die Ringsegmente als Einzelteile gefertigt sind und durch einen Federring zu einer Baueinheit zusammengehalten werden. Zur Beibehaltung gleichmässiger Zwischenräume zwischen den Ringsegmenten greifen diese mit nasenartigen Vorsprüngen in kerbenartige Ausnehmungen des Kopfteils ein.

Der Erfindung liegt die Aufgabe zugrunde, einen Spreizanker zum Einsatz in eine Erweiterung aufweisenden Bohrlöchern zu schaffen, der sich durch einfache Herstellbarkeit und einfache Setzbarkeit auszeichnet sowie sich zur Aufnahme von Querkräften eignet.

Erfindungsgemäss wird die Aufgabe dadurch gelöst, dass die Ringsegmente an einer sich entgegen der Setzrichtung erstreckenden Stützhülse angeordnet sind und die Mantelkontur der Stützhülse radial überragen, wobei die Spreizhülse zum Einrücken der Ringsegmente in die Stützhülse eintreibbar ist.

Durch einstückige Ausbildung von Ringsegmenten und Stützhülse wird eine einfache Herstellbarkeit des Spreizankers erreicht, indem beispielsweise aufwendige Montagemanipulationen für das Zusammenfügen der Ringsegmente sich erübrigen. Auch für den Setzvorgang erweist sich der einfache Aufbau des Spreizankers als vorteilhaft.

Zum Ausrücken der Ringsegmente wird die Spreizhülse in Setzrichtung in die Stützhülse und zwischen die Ringsegmente vorgetrieben, bis das setzrichtungsseitige Ende der Spreizhülse an dem auf der Ankerstange sitzenden Kopfteil aufläuft. In dieser so erlangten Spreizposition der Spreizhülse steht deren entgegen der Setzrichtung weisendes Ende stets in definierter axialer Position zur Stützhülse. Diese Position zeigt das ordnungsgemässe Einrücken der Ringsegmente in die Erweiterung an.

Durch das Vortreiben der Spreizhülse weitet diese die Stützhülse radial auf, so dass sich die Mantelkontur der Stützhülse an der Wandung des Bohrloches anlegt. Die radiale Tiefe der Erweiterung ist hierzu zweckmässig grösser als das Ausmass des radialen Ueberragens der Mantelkontur der Stützhülse durch die Ringsegmente.

Bei dem erfindungsgemässen Spreizanker übernehmen die in die Erweiterung formschlüssig einragenden Ringsegmente die axialen Belastungskräfte, während die an der Wandung des Bohrloches anliegende Stützhülse spielfrei Querkräfte aufzunehmen vermag. Die Stützhülse reicht vorzugsweise nahe an die Mündung des Bohrloches heran, so dass die Querkräfte über einen langen Abschnitt des Bohrloches in das Aufnahmematerial eingeleitet werden.

Das Eintreten der Spreizhülse in die Stützhülse wird vorzugsweise erleichtert, indem sich die Innenkontur der Stützhülse in Setzrichtung kegelig verjüngt. Diese Verjüngung kann sich auch in den Ringsegmenten fortsetzen. Ein flächiger Angriff der Spreizhülse an der sich kegelig verjüngenden Innenkontur der Stützhülse lässt sich durch eine korrespondierend kegelige Aussenkontur der Spreizhülse erzielen.

Nach einem weiteren Vorschlag verjüngt sich die Mantelkontur der Stützhülse in Setzrichtung kegelig. Die Wandstärke der Stützhülse kann auf diese Weise über deren gesamte Länge gleichbleibend sein. Es handelt sich hierbei um eine material- und gewichtssparende Ausführungsform.

In Weiterbildung der Erfindung erstrecken sich die Ringsegmente radial bis zu dem in Axialprojektion des Ankers grössten Durchmesser der Mantelkontur der Stützhülse. Der grösste Druchmesser der Mantelkontur der Stützhülse ist an dem entgegen der Setzrichtung weisenden Ende derselben gegeben. Der Setzvorgang erfolgt unter zunehmender radialer Spannkraft, die sich aufgrund der radialen Verformung der Stützhülse aufbaut. Diese Spannkraft sorgt auch bei dynamischer Belastung für zuverlässigen axialen Halt der Spreizhülse in der Stützhülse.

Zur Erzielung verbesserten radialer Verformbarkeit, insbesondere bei Herstellung der Stützhülse und der Ringsegmente aus Metall, schliessen sich an die Zwischenräume zwischen den Ringsegmenten Längsschlitze entgegen der Setzrichtung in der Stützhülse an. Vorzugsweise sind zumindest drei, höchstens zehn gleich grosse Ringsegmente und damit eine entsprechende Anzahl Längsschlitze vorgesehen.

Die Längsschlitze weisen nach einer bevorzugten Ausführungsform eine dem Zwei- bis Vierfachen der axialen Erstreckung der Ringsegmente entsprechende Länge auf. Zweckmässig erstreckt sich einer der Längsschlitze über die gesamte Länge der Stützhülse, so dass diese über die gesamte Länge leichter weitbar ist.

Die Erfindung wird nachstehend anhand einer Zeichnung, die ein Ausführungsbeispiel eines Spreizankers wiedergibt, näher erläutert. Es zeigen :

Fig. 1 Den Spreizanker vor dem Spreizvorgang, im Längsschnitt ;

Fig. 2 einen Schnitt durch den Spreizanker nach Fig. 1, gemäss Schnittverlauf II-II ;

Fig. 3 den Spreizanker in gespreiztem Zustand, im Verwendungseinsatz, im Längsschnitt.

Der Spreizanker besteht im wesentlichen aus einer insgesamt mit 1 bezeichneten Ankerstange, insgesamt mit 2 bezeichneten Ringsegmenten, die an einer insgesamt mit 3 bezeichneten Stützhülse angeordnet sind, und einer insgesamt mit 4 bezeichneten Spreizhülse. Der Spreizanker wird in einem Aufnahmematerial 5 verankert, das mit einem zylindrischen Bohrloch 6 und setzrichtungsseitig mit einer Erweiterung 7 versehen ist.

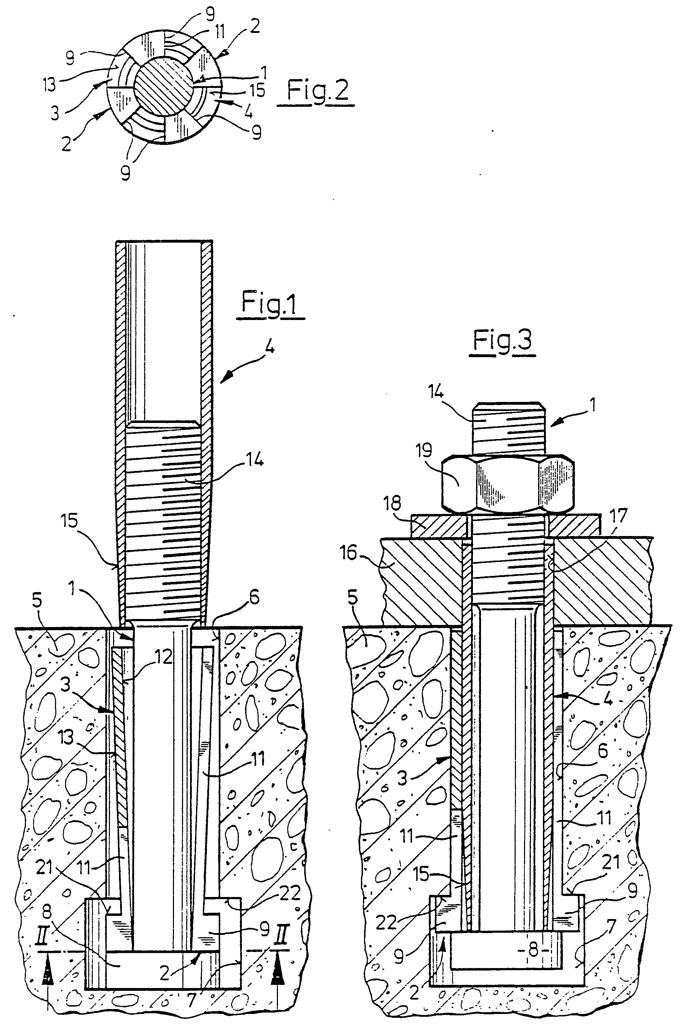

Zum Setzen wird, wie der Fig. 1 zu entnehmen ist, vorerst der Ankerbolzen 1, der setzrichtungsseitig ein Kopfteil 8 trägt, mit der Stützhülse 3 in das Bohrloch 6 eingeführt. Die Ringsegmente 2 kommen dabei in den Bereich der Erweiterung 7 zu liegen. In Umfangsrichtung sind die Ringsegmente 2 durch weitbare schlitzartige Zwischenräume 9 voneinander getrennt, wie dies insbesondere die Fig. 2 verdeutlicht. Die Zwischenräume 9 gehen in Setzrichtung in Längsschlitze 11 der Stützhülse 3 über. Die Innenkontur 12 der Stützhülse 3 ist in Setzrichtung sich verjüngend ausgebildet. Korrespondierend verjüngt sich auch die Mantelkontur 13 der Stützhülse 3, so dass diese über die gesamte Länge gleiche Dicke aufweist.

Entgegen der Setzrichtung ragt aus dem Bohrloch 6 ein Gewindeabschnitt 14 der Ankerstange 1. Ueber diesen ist die Spreizhülse 4 geschoben. Letztere weist im setzrichtungsseitigen Bereich, korrespondierend zur Innenkontur 12, eine kegelige Aussenkontur 15 auf.

Zur Verankerung wird die Spreizhülse 4, beispielsweise unter Einsatz eines rohrförmigen Hilfswerkzeugs, in Setzrichtung in die Stützhülse 3 bis zum Auflaufen am Kopfteil 8 vorgetrieben. Dadurch werden die Stützhülse 3 und die Ringsegmente 2 radial ausgelenkt. Letztere gelangen somit in die Erweiterung 7, wobei es zur Abstützung der Spreizhülse 3 an der Wandung des Bohrloches 6 kommt.

Auf die Oberseite des Aufnahmematerials 5 wird sodann ein zu befestigender Gegenstand 16 aufgebracht, der mit einer Durchtrittsöffnung 17 versehen ist, die dem Eingriff des aus dem Aufnahmematerial 5 ragenden Abschnittes der Spreizhülse 4 dient. Unter Zwischenlage einer Beilegscheibe 18 wird sodann eine Mutter 19 auf den Gewindeabschnitt 14, aufgeschraubt. Dabei legt sich in einer ersten Phase eine Schulter 21 der Ringsegmente 2 gegen einen Stützrand 22 der Erweiterung 7, wie dies die Fig. 3 zeigt. Durch weiteres Anziehen der Mutter 19 wird der Gegenstand 16 sodann gegen das Aufnahmematerial 5 gespannt.

## Patentansprüche

1. Spreizanker zum Einsatz in eine Erweiterung (7) aufweisenden Bohrlöchern (6), mit radial in die Erweiterung (7) einrückbaren Ringsegmenten (2), einer dem Einrücken der Ringsegmente (2) dienenden Spreizhülse (3) und einer Ankerstange (1), die am setzrichtungsseitigen Ende ein Kopfteil (8) zur axialen Abstützung der Ringsegmente (2) aufweist, dadurch gekennzeichnet, dass die Ringsegmente (2) an einer sich entgegen der Setzrichtung erstreckenden Stützhülse (3) angeordnet sind und die Mantelkontur (13) der Stützhülse (3) radial überragen, wobei die Spreizhülse (4) zum Einrücken der Ringsegmente (2) in die Stützhülse (3) eintreibbar ist.

2. Spreizanker nach Anspruch 1, dadurch gekennzeichnet, dass sich die Innenkontur (12) der Stützhülse (3) in Setzrichtung kegelig verjüngt.

3. Spreizanker nach Anspruch 1 oder 2, dadurch gekennzeichnet, dass sich die Mantelkontur (13) der Stützhülse (3) in Setzrichtung kegelig verjüngt.

4. Spreizanker nach Anspruch 3, dadurch gekennzeichnet, dass sich die Ringsegmente (2) radial bis zu dem in Axialprojektion des Ankers grössten Durchmesser der Mantelkontur (13) der Stützhülse (3) erstrecken.

5. Spreizanker nach einem der Ansprüche 1 bis 4, dadurch gekennzeichnet, dass sich an die Zwischenräume (9) zwischen den Ringsegmenten (2) Längsschlitze (11) entgegen der Setzrichtung in der Stützhülse (3) anschliessen.

6. Spreizanker nach Anspruch 5, dadurch gekennzeichnet, dass die Längsschlitze (11) eine dem Zwei- bis Vierfachen der axialen Erstreckung der Ringsegmente (2) entsprechende Länge aufweisen.

## Claims

1. An expansible anchor for use in drill-holes having a widening (7), comprising ring segments (2) which are engageable into the widening (7), an expansible sleeve (3) serving for the engaging of the ring segments (2) and an anchor rod (1) which has, at the setting-direction-sided end, a head part (8) for the axial supporting of the ring segments (2), characterised in that the ring segments (2), are arranged on a supporting sleeve (3) extending contrary to the setting direction and project radially beyond the jacket contour (13) of the supporting sleeve (3), in which respect the expansion sleeve (4) can be driven into the supporting sleeve (3) for the engagement of the ring segments.

2. An expansible anchor according to claim 1, characterised in that the inner contour (12) of the supporting sleeve (3) tapers conically in the setting direction.

3. An expansible anchor according to claim 1 or 2, characterised in that the jacket contour (13) of the supporting sleeve (3) tapers conically in the setting direction.

4. An expansible anchor according to claim 3, characterised in that the ring segments (2) extend radially as far as the greatest diameter, in axial projection of the anchor, of the jacket contour (13) of the supporting sleeve (3).

5. An expansible anchor according to any one of claims 1 to 4, characterised in that there link on to the interstices (9) between the ring segments (2) longitudinal slots (11) contrary to the setting direction in the supporting sleeve (3).

6. An expansible anchor according to claim 5, characterised in that the longitudinal slots (11) have a length corresponding to twice up to four times the axial extent of the ring segments (2).

## Revendications

1. Cheville à expansion à introduire dans des trous forés (6) présentant un élargissement (7), avec des segments annulaires (2) que l'on peut mettre en place radialement dans l'élargissement (7), une douille d'expansion (3) servant à la mise en place des segments annulaires (2) et une tige de cheville (1), qui présente sur l'extrémité du côté de la direction d'introduction une tête (8) pour supporter axialement les segments annulaires (2), caractérisée en ce que les segments annulaires (2) sont disposés sur une douille-support (3) qui s'étend en sens opposé à la direction d'introduction et font saillie radialement hors du contour d'enveloppe (13) de la douille-support (3), tandis que la douille d'expansion (4) peut être enfoncée dans la douille-support (3) pour mettre en place les segments annulaires.

2. Cheville à expansion selon la revendication 1, caractérisée en ce que le contour intérieur (12) de la douille-support (3) se rétrécit coniquement dans la direction d'introduction.

3. Cheville à expansion selon la revendication 1 ou 2, caractérisée en ce que le contour d'enveloppe (13) de la douille-support (3) se rétrécit coniquement dans la direction d'introduction.

4. Cheville à expansion selon la revendication 3, caractérisée en ce que les segments annulaires (2) s'étendent radialement jusqu'au diamètre du contour d'enveloppe (13) de la douille-support (3) le plus grand en projection axiale de la cheville.

5. Cheville à expansion selon l'une des revendications 1 à 4, caractérisée en ce que les espaces intermédiaires (9) entre les segments annulaires (2) se poursuivent dans la douille-support (3) par des fentes longitudinales (11) en sens opposé à la direction d'introduction.

6. Cheville à expansion selon la revendication 5, caractérisée en ce que les fentes longitudinales (11) présentent une longueur correspondant à deux à quatre fois l'extension axiale des segments annulaires (2).

Fig.2

Fig.1

Fig.3